(19) Europäisches Patentamt / European Patent Office / Office européen des brevets

(11) **EP 2 721 096 B1**

(12) **EUROPEAN PATENT SPECIFICATION**

(45) Date of publication and mention
of the grant of the patent:
**18.05.2016 Bulletin 2016/20**

(21) Application number: **12729276.1**

(22) Date of filing: **08.06.2012**

(51) Int Cl.:
***C08J 5/18*** (2006.01)       ***G02B 1/10*** (2006.01)
***G02B 5/30*** (2006.01)

(86) International application number:
**PCT/US2012/041457**

(87) International publication number:
**WO 2012/173879 (20.12.2012 Gazette 2012/51)**

(54) **CELLULOSE TRIACETATE FILMS WITH LOW BIREFRINGENCE**

CELLULOSETRIACETATFILME MIT NIEDRIGER BIREFRINGENZ

FILMS DE TRIACÉTATE DE CELLULOSE QUI PRÉSENTENT UNE FAIBLE BIRÉFRINGENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2011 US 201113160785**

(43) Date of publication of application:
**23.04.2014 Bulletin 2014/17**

(73) Proprietor: **Eastman Chemical Company
Kingsport, TN 37660 (US)**

(72) Inventors:
• **DONELSON, Michael Eugene
Kingsport, TN 37664 (US)**
• **MAINE, James Collins
Church Hill, TN 37642 (US)**
• **WANG, Bin
Kingsport, TN 37660 (US)**
• **SHELBY, Marcus David
Fall Branch, TN 37656 (US)**

(74) Representative: **Ricker, Mathias
Wallinger Ricker Schlotter Tostmann
Patent- und Rechtsanwälte
Zweibrückenstrasse 5-7
80331 München (DE)**

(56) References cited:
**US-A1- 2003 171 458       US-A1- 2008 032 067
US-A1- 2008 173 215       US-A1- 2009 043 088
US-A1- 2009 046 225       US-A1- 2010 245 730
US-A1- 2010 292 413**

• **DATABASE WPI Week 200535 Thomson
Scientific, London, GB; AN 2005-337024
XP002681270, & JP 2005 104148 A (FUJI PHOTO
FILM CO LTD) 21 April 2005 (2005-04-21)**
• **DATABASE WPI Week 200239 Thomson
Scientific, London, GB; AN 2002-356152
XP002681271, & JP 2002 030158 A (FUJI FILM
CORP) 31 January 2002 (2002-01-31)**
• **DATABASE WPI Week 200247 Thomson
Scientific, London, GB; AN 2002-438990
XP002681272, & JP 2002 060545 A (MITSUBISHI
PLASTICS IND LTD) 26 February 2002
(2002-02-26)**

**Description**

FIELD OF THE INVENTION

The present invention generally relates to films made from cellulose triacetate having low hydroxyl content and certain plasticizers, and processes for making the films. These films can exhibit low birefringence, making them particularly suitable for use in optical applications, such as in liquid crystal displays (LCD) as protective and compensator films.

BACKGROUND OF THE INVENTION

Cellulose esters such as cellulose triacetate (CTA or TAC), cellulose acetate propionate (CAP), and cellulose acetate butyrate (CAB), are used in a wide variety of films by the liquid crystal display (LCD) industry. Most notable is their use as protective or compensator films in conjunction with polarizer sheets, as described in, e.g., US 2009/0068381 A1. These films are typically made by solvent casting, and then are laminated to either side of an oriented, iodinated polyvinyl alcohol (PVOH or PVA) polarizing film to protect the PVOH layer against scratching and moisture ingress, while also increasing structural rigidity. Alternatively, as in the case of compensator films, they can be laminated with the polarizer stack or otherwise included between the polarizer and liquid crystal layers. Cellulose esters can have many performance advantages over other materials used in display films such as cycloolefins, polycarbonates, polyimides, etc.
In addition to serving a protective role, these films can also play a role in improving the contrast ratio, wide viewing angle, and color shift performance of the LCD. For a typical set of crossed polarizers used in an LCD, there is significant light leakage along the diagonals (leading to a poor contrast ratio), particularly as the viewing angle is increased. It is known that various combinations of optical films can be used to correct or "compensate" for this light leakage. These films must have certain well-defined birefringences (or retardations) that vary depending on the type of liquid crystal cell used, since the liquid crystal cell itself will also impart a certain degree of undesirable optical retardation that must be corrected. Some of these compensator films are easier to make than others, so compromises are often made between performance and cost. Also, while most of the compensator and protective films are made by solvent casting, there is a push to make more films by melt extrusion.
Compensator and optical films are commonly quantified in terms of birefringence, which is related to the refractive index n. The refractive index is typically in the range of 1.4 to 1.8 for polymers in general, and approximately 1.46 to 1.50 for cellulose esters. For a given material, the higher the refractive index, the slower the speed of light propagating through it.
For an unoriented isotropic material, the refractive index will be the same regardless of the polarization state of the entering light wave. As the material becomes oriented, or otherwise anisotropic, the refractive index becomes dependent on material direction. For purposes of the present invention, there are three refractive indices of interest denoted as $n_x$, $n_y$, and $n_z$, which correspond to the machine direction (MD), the transverse direction (TD), and the thickness direction, respectively. As the material becomes more anisotropic (e.g., by stretching it), the difference between any two refractive indices will increase. This difference is referred to as the "birefringence."
Because there are many combinations of material directions to choose from, there are correspondingly different values of birefringence. The two that are the most common, namely the planar birefringence $\Delta n_e$, and the thickness birefringence $\Delta n_{th}$, are defined as:

$$(1a)\quad \Delta n_e = n_x - n_y;$$

and

$$(1b)\quad \Delta n_{th} = [n_z - (n_x + n_y)] / 2.$$

The birefringence $\Delta n_e$ is a measure of the relative in-plane orientation between the MD and the TD, and is dimensionless. In contrast, $\Delta n_{th}$ gives a measure of the orientation of the thickness direction, relative to the average planar orientation.
Another term often used to characterize optical films is the optical retardation (R). R is simply the birefringence times the thickness (d) of the film in question. Thus,

$$(2a) \quad R_e = \Delta n_e d = (n_x - n_y) * d;$$

and

$$(2b) \quad R_{th} = \Delta n_{th} d = [n_z - (n_x + n_y) / 2] * d.$$

Retardation is a direct measure of the relative phase shift between the two orthogonal optical waves and is typically reported in units of nanometers (nm). Note that the definition of $R_{th}$ varies with some authors particularly with regard to the +/- sign.

The birefringence/retardation behavior of materials is also known to vary. For example, most materials when stretched, will exhibit a higher refractive index along the stretch direction and a lower refractive index perpendicular to the stretch direction. This follows because, on a molecular level, the refractive index is typically higher along the polymer chain's axis and lower perpendicular to the chain. These materials are commonly termed "positively birefringent" and represent most standard polymers including all commercial cellulose esters.

Another useful parameter is the "intrinsic birefringence," which is a property of the material and is a measure of the birefringence that would occur if the material were fully stretched with all chains perfectly aligned in one direction.

There are two other much rarer classes of materials, namely "negative birefringent" and "zero birefringent." Negative birefringent polymers exhibit a higher refractive index perpendicular to the stretch direction (relative to the parallel direction), and consequently also have a negative intrinsic birefringence. Certain styrenics and acrylics are known to have negative birefringent behavior due to their rather bulky side groups. Zero birefringence, in contrast, is a special case and represents materials that show no birefringence with stretching and thus have a zero intrinsic birefringence. Such materials are ideal for optical applications as they can be molded, stretched, or otherwise stressed during processing without showing any optical retardation or distortion. Such materials are also extremely rare.

In order for compensator films to properly eliminate light leakage, they must be combined in certain ways depending on the type of liquid crystal cell used. For example, Fundamentals of Liquid Crystal Displays (D.K. Yang and S.T. Wu, Wiley, New Jersey, 2006, pp 208-237) describes various ways to compensate for IPS (in-plane switching), twisted nematic (TN), and VA (vertical alignment) type cells using combinations of uniaxial plates (biaxial plates are also effective but are more complicated mathematically). In the case of an IPS cell, a low retardation film is more effective for minimizing light leakage compared to a conventional cellulose triacetate film.

For example, when backlight passes through a pair of crossed polarizers with two conventional cellulose triacetate (TAC) films (both having $R_e$ = 0 nm and $R_{th}$ = -40 nm), the calculated iso-contour plot of light transmission shows that there is about 2.2% light leakage at 45° along the polarizer transmission axes.

On the other hand, when backlight passes through a pair of crossed polarizers with two zero retardation TAC films (both having $R_e$ = 0 nm and $R_{th}$ = 0 nm), the calculated iso-contour plot of light transmission shows that there is about 1.3% light leakage at 45° along the polarizer transmission axes at its maximum.

Thus, by replacing two conventional TAC films with two zero-retardation TAC films, light leakage can be reduced by almost half.

In addition, one of the advantages of using cellulose ester-based, zero-retardation films over non-cellulose ester-based, zero-retardation films is that the cellulose ester-based films adhere to PVA very well. Therefore, current polarizer processing procedures would not be affected.

Unfortunately, the $R_{th}$ values of typical solvent-cast cellulose triacetate films normally range from about -20 to -70 nm. Thus, there is a need in the art to provide cellulose triacetate films with less retardation, preferably zero or near zero retardation, in order to improve compensation film performance of LCDs that operate in IPS mode.

The present invention addresses this need as well as others that will become apparent from the following description and the appended claims.

SUMMARY OF THE INVENTION

It has been surprisingly discovered that cellulose triacetate films can be prepared with low or zero optical retardation in the thickness direction. These films can be particularly useful as LCD compensation films.

In one aspect, the invention provides a film comprising:

(a) a cellulose triacetate having an acetyl degree of substitution ($DS_{acetyl}$) of 2.8 to 2.95; and

(b) 5 to 15 weight percent, based on the total weight of the film, of a plasticizer selected from the group consisting of sorbitol hexapropionate, xylitol pentaacetate, xylitol pentapropionate, triacetin, polyester succinate, butylbenzenesulfonamide, camphor, 2,2,4-trimethyl-1,3-pentanediol diisobutyrate, polyester adipate, epoxidized octyl tallate, polyethylene glycol, tri(ethylene glycol) bis(2-ethyl hexanoate), and mixtures thereof. The film has been annealed at a temperature of 100 to 140°C for 1 minute to less than 60 minutes. In addition, the film has an optical retardation value in the thickness direction ($R_{th}$) of -15 to +15 nm when measured at a wavelength of 589 nm and normalized to a film thickness of 60 μm or less.

In a second aspect, the invention provides a process for making a film. The process comprises the steps of:

(a) forming a dope comprising:

(i) a cellulose triacetate having an acetyl degree of substitution ($DS_{acetyl}$) of 2.8 to 2.95;
(ii) a plasticizer selected from the group consisting of sorbitol hexapropionate, xylitol pentaacetate, xylitol pentapropionate, triacetin, polyester succinate, butylbenzenesulfonamide, camphor, 2,2,4-trimethyl-1,3-pentanediol diisobutyrate, polyester adipate, epoxidized octyl tallate, polyethylene glycol, tri(ethylene glycol) bis(2-ethyl hexanoate), and mixtures thereof; and
(iii) a solvent;

(b) casting the dope onto a surface to form a wet film;
(c) evaporating at least a portion of the solvent from the wet film to form a dry film; and
(d) annealing the dry film at a temperature of 100 to 140°C for 1 minute to less than 60 minutes to form a final film. The final film comprises 5 to 15 weight percent of the plasticizer, based on the total weight of the film. The final film also has an optical retardation value in the thickness direction ($R_{th}$) of -15 to +15 nm when measured at a wavelength of 589 nm and normalized to a film thickness of 60 μm or less.

DETAILED DESCRIPTION OF THE INVENTION

According to the present invention, there is provided a film comprising:

(a) a cellulose triacetate having an acetyl degree of substitution ($DS_{acetyl}$) of 2.8 to 2.95; and
(b) 5 to 15 weight percent, based on the total weight of the film, of a plasticizer selected from the group consisting of sorbitol hexapropionate, xylitol pentaacetate, xylitol pentapropionate, triacetin, polyester succinate, butylbenzenesulfonamide, camphor, 2,2,4-trimethyl-1,3-pentanediol diisobutyrate, polyester adipate, epoxidized octyl tallate, polyethylene glycol, tri(ethylene glycol) bis(2-ethyl hexanoate), and mixtures thereof.

The film has been annealed at a temperature of 100 to 140°C for 1 minute to less than 60 minutes.
In addition, the film has an optical retardation value in the thickness direction ($R_{th}$) of -15 to +15 nm when measured at a wavelength of 589 nm and normalized to a film thickness of 60 μm or less.
In one embodiment, the film has an $R_{th}$ value in the range of -10 to +10 nm. In another embodiment, the film has an $R_{th}$ value in the range of -5 to +5 nm. Other $R_{th}$ value ranges, within these general ranges, are also contemplated within the scope of this invention, such as -3 to +3 nm.
The thickness of the film according to the present invention can vary depending on the application. Generally, for LCD applications, for example, the film thickness can range from 40 to 100 μm. Other film thickness ranges include 40 to 80 μm, and 40 to 60 μm.
The cellulose triacetate (CTA) for use in the films of the invention has an acetyl degree of substitution ($DS_{acetyl}$) of 2.8 to 2.95. This corresponds to a $DS_{OH}$ of 0.05 to 0.2. Cellulose triacetates with this $DS_{acetyl}$ are commercially available from vendors such as Eastman Chemical Company.
The film typically contains from 85 to 95 wt% of the CTA, based on the total weight of the film. In some embodiments, the film can contain from 85 to 90 wt% or 90 to 95 wt% of CTA.
The plasticizers according to the invention are selected from sorbitol hexapropionate, xylitol pentaacetate, xylitol pentapropionate, triacetin, polyester succinate (such as Resoflex® 804), butylbenzenesulfonamide, camphor, 2,2,4-trimethyl-1,3-pentanediol diisobutyrate, polyester adipate (such as Resoflex® 296 or Paraplex® G-50), epoxidized octyl tallate (such as Drapex® 4.4), polyethylene glycol (such as PEG 400 or 600), and tri(ethylene glycol) bis(2-ethyl hexanoate). These plasticizers are commercially available.
The amount of plasticizer in the composition can vary, depending on the particular plasticizer used, the annealing conditions employed, and the level of $R_{th}$ desired. Generally, the plasticizer may be present in an amount ranging from 5 to 15 weight percent based on the total weight of the film. The plasticizer may also be present in an amount ranging from 5 to 10 weight percent or 10 to 15 weight percent.

In addition to plasticizers, the films of the invention may also contain additives such as stabilizers, UV absorbers, antiblocking agents, slip agents, lubricants, pinning agents, dyes, pigments, retardation modifiers, matteing agents, mold release agents, etc.

The present invention also provides for a process for making a film. The process comprises the steps of:

(a) forming a dope comprising:

(i) a cellulose triacetate having an acetyl degree of substitution ($DS_{acetyl}$) of 2.8 to 2.95;
(ii) a plasticizer selected from the group consisting of sorbitol hexapropionate, xylitol pentaacetate, xylitol pentapropionate, triacetin, polyester succinate, butylbenzenesulfonamide, camphor, 2,2,4-trimethyl-1,3-pentanediol diisobutyrate, polyester adipate, epoxidized octyl tallate, polyethylene glycol, tri(ethylene glycol) bis(2-ethyl hexanoate), and mixtures thereof; and
(iii) a solvent;

(b) casting the dope onto a surface to form a wet film;
(c) evaporating at least a portion of the solvent from the wet film to form a dry film; and
(d) annealing the dry film at a temperature of 100 to 140°C for 1 minute to less than 60 minutes to form a final film.

The final film comprises 5 to 15 weight percent of the plasticizer, based on the total weight of the film.

The final film also has an optical retardation value in the thickness direction ($R_{th}$) of -15 to +15 nm when measured at a wavelength of 589 nm and normalized to a film thickness of 60 $\mu$m or less.

The CTA, the plasticizer, and the solvent may be combined in any manner to form the dope. For example, the CTA and the plasticizer may be combined together before addition to the solvent. Alternatively, the CTA and the plasticizer may be added individually to the solvent. After the ingredients are combined, the mixture should be mixed thoroughly to ensure a substantially uniform casting dope.

The solvent in which the CTA and the plasticizer are mixed is not particularly limiting. It can be any liquid suitable for making a dope to form a CTA film by casting. Typical solvents include methylene chloride and alcohols. One such solvent is an 85/15 vol% mixture of methylene chloride and methanol or ethanol.

The resulting dope can be cast onto typical solvent casting equipment such as a casting belt, a casting drum, or a moving plastic film to form a wet film. The surface of the casting belt and drum is typically made of stainless steel or chromium-plated steel. The surface of the moving plastic film can be made of PTFE or siliconized PET.

After casting, the wet film undergoes an evaporation step to remove at least a portion of the solvent to yield a dry film. The dry film can have a residual solvent content of 1 to 50 weight percent. In some embodiments, the residual solvent content can range from 3 to 40 weight percent. In other embodiments, the residual solvent content of the dry film can range from 3 to 6 weight percent.

The evaporation step can be conducted at ambient conditions. Alternatively, the evaporation step can be carried out at elevated temperatures, such as from 25°C up to 100°C, from 30°C to 95°C, or from 40°C to 80°C. Various methods can be used to facilitate evaporation, such as indirect heating, heating by radiation, and/or controlled flow of air, which is optionally heated or solvent-loaded.

Following the evaporation step, the dry film can be removed from the casting surface and then annealed. Alternatively, the dry film can be annealed while on the casting surface. The annealing step may be conducted in any suitable equipment, such as in a forced-air oven in one or more stages, such as at 100°C for up 10 minutes, and then at a higher temperature (e.g., 120°C, 130°C, or 140°C) for up to 20 minutes. During annealing, the film may be constrained in any suitable device to prevent shrinkage.

After annealing, the film typically has a residual solvent content of less than 3 weight percent. In some embodiments, the annealed film can have a residual solvent content of less than 1.5 weight percent. In other embodiments, the annealed film can have a residual solvent content of less than 0.5 weight percent.

Without wishing to be bound by theory, the primary purpose of the annealing step is to increase the diffusion of residual solvents that might remain in the film from the casting process. However, an additional benefit of annealing is the relaxation of residual stresses that developed during the casting process. As the film adheres to the casting substrate, the solvents evaporate to the open surface creating internal stresses in the film. These stresses depend on material properties, solvent mix, adhesion to the substrate, and solvent evaporation rate. Casting methods and rates can lead to higher stresses, higher birefringence, and higher retardation. Relaxing these process-induced stresses is desirable for producing films with dimensional stability and low retardation.

These annealing times and temperatures can vary, depending on the casting technique used. For example, if a continuous solvent casting line is used instead of a batch process in a laboratory, lower annealing temperatures and shorter times may be used.

The final film can be post-treated with methods well known in the art such as corona treatment, plasma treatment, flame treatment, etc. The film can also be saponified to ensure good adhesion with subsequent PVOH polarizing layers.

The present invention also provides for a polarizing plate that comprises the films described herein. The present invention further provides for a liquid crystal display that comprises such a polarizing plate. For liquid crystal display applications, the films of the invention will ultimately be combined with other films and structures to form an overall liquid crystal device. Examples of processes used include lamination and/or coating.

These structures are commonly known to those skilled in the art, and it is understood that the films of the present invention can be used in a variety of forms depending on the specifics of the particular manufacturer and liquid crystal cell type.

In one embodiment, the plasticizer of the film according to the invention is selected from the group consisting of xylitol pentaacetate, triacetin, butylbenzenesulfonamide, camphor, 2,2,4-trimethyl-1,3-pentanediol diisobutyrate, polyester adipate, epoxidized octyl tallate, polyethylene glycol, or tri(ethylene glycol) bis(2-ethyl hexanoate).

The present invention also provides for a polarizing plate comprising the film according to the invention, wherein the plasticizer is selected from the group consisting of xylitol pentaacetate, triacetin, butylbenzenesulfonamide, camphor, 2,2,4-trimethyl-1,3-pentanediol diisobutyrate, polyester adipate, epoxidized octyl tallate, polyethylene glycol, or tri(ethylene glycol) bis(2-ethyl hexanoate).

The present invention also provides for a liquid crystal display comprising a polarizing plate comprising the film according to the invention, wherein the plasticizer is selected from the group consisting of xylitol pentaacetate, triacetin, butylbenzenesulfonamide, camphor, 2,2,4-trimethyl-1,3-pentanediol diisobutyrate, polyester adipate, epoxidized octyl tallate, polyethylene glycol, or tri(ethylene glycol) bis(2-ethyl hexanoate).

In one embodiment, the plasticizer of step (ii) of the process for making the film according to the invention is selected from the group consisting of xylitol pentaacetate, triacetin, butylbenzenesulfonamide, camphor, 2,2,4-trimethyl-1,3-pentanediol diisobutyrate, polyester adipate, epoxidized octyl tallate, polyethylene glycol, or tri(ethylene glycol) bis(2-ethyl hexanoate).

This invention can be further illustrated by the following working examples, although it should be understood that these examples are included merely for purposes of illustration and are not intended to limit the scope of the invention.

EXAMPLES

Measurement Procedure

Film optical retardations $R_e$ and $R_{th}$ were measured using a Woollam ellipsometer M-2000V having a wavelength range of 370 to 1000 nm. For comparison purposes, the measurements were made at a wavelength of 589 nm, and the data was normalized to a film thickness of 60 $\mu$m and 40 $\mu$m.

This normalized retardation is calculated as follows:

$$R_{th} = \text{target thickness} * mR_{th} / d;$$

and

$$R_e = \text{target thickness} * mR_e / d$$

where $mR_{th}$ is the measured $R_{th}$ of the film sample, $mR_e$ is the measured $R_e$ of the film sample, and d is the actual film thickness in microns. The target film thickness was either 60 $\mu$m or 40 $\mu$m. Both normalized data sets are included in the examples below.

Materials

All of the examples used the same commercially available cellulose triacetate (CTA) resin having a $DS_{acetyl}$ of about 2.86.

The following table identifies abbreviations for some of the plasticizers used in the examples.

| Plasticizer | Abbreviation | Plasticizer | Abbreviation |
|---|---|---|---|
| sorbitol hexapropionate | SHP | mixed dibasic acid polyester (Paraplex G-31) | G-31 |
| xylitol pentaacetate | XPA | polyester adipate (Paraplex G-50) | G-50 |

(continued)

| Plasticizer | Abbreviation | Plasticizer | Abbreviation |
|---|---|---|---|
| xylitol pentapropionate | XPP | polyester adipate (Resoflex 296) | R296 |
| triphenyl phosphate | TPP | epoxidized octyl tallate (Drapex 4.4) | D44 |
| polyester succinate (Resoflex 804) | R804 | epoxidized soybean oil (Drapex 6.8) | D68 |
| butylbenzene sulfonamide | BSA | polyethylene glycol (MW 600) | PEG 600 |
| 2,2,4-trimethyl-1,3-pentanediol diisobutyrate | TXIB | tri(ethylene glycol) bis(2-ethyl hexanoate) | TEG-EH |

Comparative Examples 1-16

Cellulose triacetate films were prepared by solvent casting using the following procedure: First, 24 grams of solids (CTA resin + plasticizers identified in Table 1 below) were added to 176 grams of an 85/15 vol% solvent mixture of methylene chloride/ethanol. The plasticizer was added at a 10 wt% loading, based on the total weight of the solids. The mixture was then sealed, placed on a roller, and mixed for 24 hours to create a uniform dope.

After mixing, the dope was cast onto a glass plate using a doctor blade adjusted to the target thickness of 40 $\mu$m. Casting was performed in a fume hood with the relative humidity control set at 50%.

After casting, the film and glass were allowed to dry for one hour under a covered pan. After this initial drying, the film was peeled from the glass and annealed at room temperature for one to several hours.

The optical retardation of the films was measured as a function of annealing time. The results are shown in Table 1.

Examples 1-5

Cellulose triacetate films were prepared by solvent casting according to the procedures described in Comparative Examples 1-16, except that the casting solvent contained methanol instead of ethanol, the film target thickness was 60 $\mu$m, and the annealing step was carried out in a forced air oven at 100°C for 10 minutes and then at 120 or 130°C for 20 minutes. In addition, annealing was performed with the film constrained in a pair of metal frames to prevent any further shrinkage.

The optical retardation of the films was measured as a function of annealing time. The results are also shown in Table 1.

Table 1

| Example No. | Additive | | Conditions Annealing Conditions | | | Retardation at 589 nm normalized for 60 $\mu$m | | Retardation at 589 nm normalized for 40 $\mu$m | |
|---|---|---|---|---|---|---|---|---|---|
| | Type | Wt% | Time (hrs) | Time (mins) | Temp. (°C) | Re (nm) | Rth (nm) | Re (nm) | Rth (nm) |
| | | | | | | | | | |
| CE-1 | SHP | 10% | 1 | na | 23 | 0.24 | -27.88 | 0.16 | -18.58 |
| CE-2 | SHP | 10% | 4 | na | 23 | 0.21 | -38.88 | 0.14 | -25.92 |
| CE-3 | SHP | 10% | 24 | na | 23 | -0.03 | -48.00 | -0.02 | -32.00 |
| CE-4 | SHP | 10% | 40 | na | 23 | 0.42 | -47.18 | 0.28 | -31.45 |
| | | | | | | | | | |
| CE-5 | XPA | 10% | 1 | na | 23 | 0.31 | -15.39 | 0.21 | -10.26 |
| CE-6 | XPA | 10% | 4 | na | 23 | -0.14 | -25.57 | -0.09 | -17.05 |
| CE-7 | XPA | 10% | 24 | na | 23 | 0.10 | -37.58 | 0.06 | -25.05 |
| CE-8 | XPA | 10% | 40 | na | 23 | -0.34 | -38.72 | -0.23 | -25.82 |
| | | | | | | | | | |
| CE-9 | XPP | 10% | 1 | na | 23 | -0.23 | -26.85 | -0.15 | -17.90 |

(continued)

| Example No. | Additive | | Conditions Annealing Conditions | | | Retardation at 589 nm normalized for 60 μm | | Retardation at 589 nm normalized for 40 μm | |
|---|---|---|---|---|---|---|---|---|---|
| | Type | Wt% | Time (hrs) | Time (mins) | Temp. (°C) | Re (nm) | Rth (nm) | Re (nm) | Rth (nm) |
| CE-10 | XPP | 10% | 4 | na | 23 | -0.04 | -38.46 | -0.03 | -25.64 |
| CE-11 | XPP | 10% | 24 | na | 23 | 0.21 | -43.24 | 0.14 | -28.83 |
| CE-12 | XPP | 10% | 40 | na | 23 | 0.18 | -43.72 | 0.12 | -29.15 |
| | | | | | | | | | |
| CE-13 | Triacetin | 10% | 1 | na | 23 | -0.22 | -12.34 | -0.14 | -8.23 |
| CE-14 | Triacetin | 10% | 4 | na | 23 | 0.27 | -23.78 | 0.18 | -15.85 |
| CE-15 | Triacetin | 10% | 24 | na | 23 | 0.13 | -32.84 | 0.08 | -21.89 |
| CE-16 | Triacetin | 10% | 40 | na | 23 | 0.19 | -32.04 | 0.12 | -21.36 |
| | | | | | | | | | |
| 1 | SHP | 10% | na | 10 | 120 | 0.38 | -18.66 | -0.81 | -12.44 |
| 2 | XPA | 10% | na | 10 | 120 | 0.47 | -5.39 | -3.47 | -3.59 |
| 3 | XPP | 10% | na | 10 | 120 | 0.45 | -15.31 | -1.18 | -10.21 |
| 4 | Triacetin | 10% | na | 10 | 130 | -0.24 | 2.36 | -0.16 | 1.57 |
| 5 | Triacetin | 10% | na | 10 | 120 | -0.01 | -2.68 | 0 | -1.79 |

Comparative Examples 17-24 and Examples 6-10

Cellulose triacetate films were prepared by solvent casting according to the procedures described in Comparative Examples 1-16, except that the casting solvent contained methanol instead of ethanol; the plasticizer loading level was varied at 5, 7.5, and 10 wt%; the film target thickness was 60 μm; and the annealing step was carried out in a forced air oven at 100°C for 10 minutes and then at 120°C for 20 minutes. In addition, annealing was performed with the film constrained in a pair of metal frames to prevent any further shrinkage.

After annealing, the optical retardation of the films was measured. The results are shown in Table 2.

Table 2

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| CE-17 | TPP | 10 | 120 | 20 | 0.34 | -49.29 | -0.27 | -32.86 |
| | | | | | | | | |
| CE-18 | SHP | 5 | 120 | 20 | 0.16 | -44.01 | -0.14 | -29.34 |
| CE-19 | SHP | 7.5 | 120 | 20 | 0.21 | -26.98 | -0.32 | -17.99 |
| 6 | SHP | 10 | 120 | 20 | 0.38 | -18.66 | -0.81 | -12.44 |
| | | | | | | | | |
| CE-20 | XPA | 5 | 120 | 20 | 0.06 | -35.15 | -0.07 | -23.44 |
| 7 | XPA | 7.5 | 120 | 20 | -0.09 | -22.8 | 0.16 | -15.2 |
| 8 | XPA | 10 | 120 | 20 | 0.47 | -5.39 | -3.47 | -3.59 |

(continued)

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| CE-21 | XPP | 5 | 120 | 20 | 0.46 | -38.95 | -0.47 | -25.97 |
| CE-22 | XPP | 7.5 | 120 | 20 | 0.04 | -24.43 | -0.07 | -16.28 |
| 9 | XPP | 10 | 120 | 20 | 0.45 | -15.31 | -1.18 | -10.21 |
| | | | | | | | | |
| CE-23 | R804 | 5 | 120 | 20 | -0.03 | -36.24 | 0.03 | -24.16 |
| CE-24 | R804 | 7.5 | 120 | 20 | -0.07 | -27.66 | 0.11 | -18.44 |
| 10 | R804 | 10 | 120 | 20 | 0.22 | -16.28 | -0.54 | -10.85 |

Examples 11-14

Cellulose triacetate films were prepared by solvent casting according to the procedures described in Comparative Examples 1-16, except that the annealing step was carried out in a forced air oven at 100°C for 10 minutes and then at 120 or 130°C for 10 minutes. In addition, annealing was performed with the film constrained in a pair of metal frames to prevent any further shrinkage.

After annealing, the optical retardation of the films was measured. The results are shown in Table 3. The results from Examples 4 and 5 are also reproduced in Table 3 for convenience.

Table 3

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| 11 | BSA | 10% | 130 | 10 | -0.04 | -4.27 | -0.03 | -2.85 |
| 12 | BSA | 10% | 120 | 10 | 0.12 | -15.32 | 0.08 | -10.22 |
| | | | | | | | | |
| 13 | Camphor | 10% | 130 | 10 | 0.01 | 9.36 | 0.01 | 6.24 |
| 14 | Camphor | 10% | 120 | 10 | -0.06 | 1.74 | -0.04 | 1.16 |
| | | | | | | | | |
| 4 | Triacetin | 10% | 130 | 10 | -0.24 | 2.36 | -0.16 | 1.57 |
| 5 | Triacetin | 10% | 120 | 10 | -0.01 | -2.68 | 0 | -1.79 |

Examples 15-24 and Comparative Examples 25-28

Cellulose triacetate films were prepared by solvent casting according to the procedures described in Comparative Examples 1-16, except that the plasticizer loading level was varied from 5 to 15 wt%, and the annealing step was carried out in a forced air oven at 100°C for 10 minutes and then at 110, 120, 130, or 140°C for 10 minutes. In addition, annealing was performed with the film constrained in a pair of metal frames to prevent any further shrinkage.

After annealing, the optical retardation of the films was measured. The results are shown in Table 4.

Table 4

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| CE-25 | TXIB | 5% | 110 | 10 | -0.05 | -32.98 | -0.03 | -21.99 |
| CE-26 | TXIB | 5% | 120 | 10 | 0.25 | -26.36 | 0.17 | -17.58 |
| 15 | TXIB | 5% | 130 | 10 | -0.04 | -19.42 | -0.03 | -12.94 |
| | | | | | | | | |
| 16 | TXIB | 10% | 110 | 10 | -0.08 | -12.54 | -0.06 | -8.36 |
| 17 | TXIB | 10% | 120 | 10 | -0.2 | -7.51 | -0.13 | -5.01 |
| 18 | TXIB | 10% | 130 | 10 | -0.01 | -5 | 0 | -3.33 |
| | | | | | | | | |
| 19 | TXIB | 12.50% | 120 | 10 | -0.01 | -0.68 | -0.01 | -0.46 |
| 20 | TXIB | 12.50% | 130 | 10 | -0.15 | 3.03 | -0.1 | 2.02 |
| 21 | TXIB | 12.50% | 140 | 10 | 0.12 | 7.59 | 0.08 | 5.06 |
| | | | | | | | | |
| 22 | TXIB | 15% | 120 | 10 | 0.2 | 5.2 | 0.13 | 3.47 |
| 23 | TXIB | 15% | 130 | 10 | 0.11 | 8.4 | 0.08 | 5.6 |
| 24 | TXIB | 15% | 140 | 10 | 0.14 | 11.1 | 0.09 | 7.4 |
| | | | | | | | | |
| CE-27 | G-31 | 5% | 130 | 10 | 0.2 | -54.66 | 0.13 | -36.44 |
| CE-28 | G-31 | 10% | 130 | 10 | -0.01 | -40.04 | -0.01 | -26.7 |

Examples 25-60 and Comparative Examples 29-64

Cellulose triacetate films were prepared by solvent casting according to the procedures described in Comparative Examples 1-16, except that the plasticizer loading level was varied from 5 to 15 wt%, and the annealing step was carried out in a forced air oven at 100°C for 10 minutes and then at 110, 120, 130, or 140°C for 10 minutes. In addition, annealing was performed with the film constrained in a pair of metal frames to prevent any further shrinkage.

After annealing, the optical retardation of the films was measured. The results are shown in Tables 5A, 5B, and 5C.

Table 5A

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| CE-29 | G-50 | 5% | 110 | 10 | 0.31 | -54.82 | 0.20 | -36.55 |
| CE-30 | G-50 | 5% | 120 | 10 | -0.17 | -43.95 | -0.11 | -29.30 |
| CE-31 | G-50 | 5% | 130 | 10 | -0.17 | -43.73 | -0.11 | -29.15 |
| CE-32 | G-50 | 5% | 140 | 10 | 0.20 | -33.99 | 0.14 | -22.66 |

(continued)

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| CE-33 | G-50 | 10% | 110 | 10 | 0.33 | -34.32 | 0.22 | -22.88 |
| CE-34 | G-50 | 10% | 120 | 10 | 0.01 | -28.22 | 0.00 | -18.82 |
| CE-35 | G-50 | 10% | 130 | 10 | 0.00 | -25.86 | 0.00 | -17.24 |
| 25 | G-50 | 10% | 140 | 10 | 0.16 | -18.59 | 0.11 | -12.40 |
| | | | | | | | | |
| 26 | G-50 | 15% | 110 | 10 | -0.05 | -16.64 | -0.03 | -11.09 |
| 27 | G-50 | 15% | 120 | 10 | 0.14 | -13.20 | 0.09 | -8.80 |
| 28 | G-50 | 15% | 130 | 10 | 0.22 | -9.88 | 0.15 | -6.59 |
| 29 | G-50 | 15% | 140 | 10 | 0.18 | -7.78 | 0.12 | -5.19 |
| | | | | | | | | |
| CE-36 | R296 | 5% | 110 | 10 | 0.16 | -51.68 | 0.11 | -34.45 |
| CE-37 | R296 | 5% | 120 | 10 | -0.24 | -58.25 | -0.16 | -38.83 |
| CE-38 | R296 | 5% | 130 | 10 | -0.25 | -35.98 | -0.17 | -23.98 |
| CE-39 | R296 | 5% | 140 | 10 | -0.04 | -30.12 | -0.03 | -20.08 |
| | | | | | | | | |
| CE-40 | R296 | 10% | 110 | 10 | -0.11 | -30.13 | -0.07 | -20.09 |
| 30 | R296 | 10% | 120 | 10 | -0.21 | -23.14 | -0.14 | -15.43 |
| 31 | R296 | 10% | 130 | 10 | -0.15 | -17.84 | -0.10 | -11.90 |
| 32 | R296 | 10% | 140 | 10 | 0.00 | -12.21 | 0.00 | -8.14 |
| | | | | | | | | |
| 33 | R296 | 15% | 110 | 10 | 0.03 | -4.83 | 0.02 | -3.22 |
| 34 | R296 | 15% | 120 | 10 | 0.15 | -1.24 | 0.10 | -0.83 |
| 35 | R296 | 15% | 130 | 10 | -0.15 | 0.16 | -0.10 | 0.11 |
| 36 | R296 | 15% | 140 | 10 | -0.04 | 1.79 | -0.02 | 1.20 |

Table 5B

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| CE-41 | D44 | 5% | 110 | 10 | 0.18 | -46.64 | 0.12 | -31.09 |
| CE-42 | D44 | 5% | 120 | 10 | -0.03 | -39.64 | -0.02 | -26.43 |
| CE-43 | D44 | 5% | 130 | 10 | 0.02 | -38.54 | 0.02 | -25.69 |
| CE-44 | D44 | 5% | 140 | 10 | 0.19 | -31.54 | 0.13 | -21.03 |

(continued)

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| CE-45 | D44 | 10% | 110 | 10 | -0.04 | -26.46 | -0.02 | -17.64 |
| 37 | D44 | 10% | 120 | 10 | -0.13 | -18.65 | -0.09 | -12.43 |
| 38 | D44 | 10% | 130 | 10 | 0.13 | -13.18 | 0.09 | -8.79 |
| 39 | D44 | 10% | 140 | 10 | -0.16 | -5.04 | -0.11 | -3.36 |
| | | | | | | | | |
| CE-46 | D44 | 15% | 110 | 10 | -0.12 | -25.63 | -0.08 | -17.09 |
| 40 | D44 | 15% | 120 | 10 | 0.24 | -23.96 | 0.16 | -15.97 |
| 41 | D44 | 15% | 130 | 10 | 0.12 | -21.03 | 0.08 | -14.02 |
| 42 | D44 | 15% | 140 | 10 | 0.46 | -19.76 | 0.31 | -13.17 |
| | | | | | | | | |
| CE-47 | D68 | 5% | 110 | 10 | 0.19 | -57.37 | 0.13 | -38.25 |
| CE-48 | D68 | 5% | 120 | 10 | 0.20 | -57.78 | 0.13 | -38.52 |
| CE-49 | D68 | 5% | 130 | 10 | -0.23 | -51.58 | -0.15 | -34.39 |
| CE-50 | D68 | 5% | 140 | 10 | -0.11 | -44.58 | -0.07 | -29.72 |
| | | | | | | | | |
| CE-51 | D68 | 10% | 110 | 10 | 0.31 | -44.36 | 0.21 | -29.58 |
| CE-52 | D68 | 10% | 120 | 10 | 0.29 | -40.66 | 0.19 | -27.11 |
| CE-53 | D68 | 10% | 130 | 10 | 0.03 | -36.45 | 0.02 | -24.30 |
| CE-54 | D68 | 10% | 140 | 10 | 0.21 | -31.25 | 0.14 | -20.83 |
| | | | | | | | | |
| CE-55 | D68 | 15% | 110 | 10 | 0.05 | -34.02 | 0.03 | -22.68 |
| CE-56 | D68 | 15% | 120 | 10 | 0.08 | -31.35 | 0.05 | -20.90 |
| CE-57 | D68 | 15% | 130 | 10 | -0.06 | -28.92 | -0.04 | -19.28 |
| CE-58 | D68 | 15% | 140 | 10 | -0.07 | -26.30 | -0.05 | -17.54 |

Table 5C

| Example No. | Additive | | Annealing Conditions | | Retardation at 589 nm normalized for 60 μm | | Retardation at 589 nm normalized for 40 μm | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| CE-59 | PEG 600 | 5% | 110 | 10 | 0.14 | -54.78 | 0.09 | -36.52 |
| CE-60 | PEG 600 | 5% | 120 | 10 | -0.25 | -48.54 | -0.17 | -32.36 |
| CE-61 | PEG 600 | 5% | 130 | 10 | 0.16 | -45.57 | 0.11 | -30.38 |
| CE-62 | PEG 600 | 5% | 140 | 10 | -0.08 | -37.12 | -0.06 | -24.74 |

(continued)

| Example No. | Additive | | Annealing Conditions | | Retardation at 589 nm normalized for 60 $\mu$m | | Retardation at 589 nm normalized for 40 $\mu$m | |
|---|---|---|---|---|---|---|---|---|
| | Type | Wt% | Temp. (°C) | Time (mins) | Re (nm) | Rth (nm) | Re (nm) | Rth (nm) |
| | | | | | | | | |
| 43 | PEG 600 | 10% | 110 | 10 | -0.54 | -18.55 | -0.36 | -12.37 |
| 44 | PEG 600 | 10% | 120 | 10 | -0.23 | -9.07 | -0.16 | -6.05 |
| 45 | PEG 600 | 10% | 130 | 10 | 0.38 | -3.64 | 0.25 | -2.43 |
| 46 | PEG 600 | 10% | 140 | 10 | 0.24 | 3.08 | 0.16 | 2.05 |
| | | | | | | | | |
| 47 | PEG 600 | 15% | 110 | 10 | -0.14 | 8.54 | -0.09 | 5.69 |
| 48 | PEG 600 | 15% | 120 | 10 | -0.26 | 12.26 | -0.17 | 8.17 |
| 49 | PEG 600 | 15% | 130 | 10 | -0.11 | 14.41 | -0.08 | 9.61 |
| 50 | PEG 600 | 15% | 140 | 10 | -0.02 | 15.43 | -0.02 | 10.28 |
| | | | | | | | | |
| CE-63 | TEG-EH | 5% | 110 | 10 | 0.05 | -29.90 | 0.04 | -19.93 |
| CE-64 | TEG-EH | 5% | 120 | 10 | -0.16 | -26.78 | -0.10 | -17.85 |
| 51 | TEG-EH | 5% | 130 | 10 | 0.07 | -21.71 | 0.05 | -14.47 |
| 52 | TEG-EH | 5% | 140 | 10 | -0.01 | -16.94 | -0.01 | -11.29 |
| | | | | | | | | |
| 53 | TEG-EH | 10% | 110 | 10 | 0.02 | -21.32 | 0.01 | -14.21 |
| 54 | TEG-EH | 10% | 120 | 10 | 0.09 | -18.12 | 0.06 | -12.08 |
| 55 | TEG-EH | 10% | 130 | 10 | 0.14 | -15.89 | 0.10 | -10.60 |
| 56 | TEG-EH | 10% | 140 | 10 | 0.09 | -12.76 | 0.06 | -8.51 |
| | | | | | | | | |
| 57 | TEG-EH | 15% | 110 | 10 | 0.21 | -7.57 | 0.14 | -5.05 |
| 58 | TEG-EH | 15% | 120 | 10 | -0.31 | -9.13 | -0.21 | -6.09 |
| 59 | TEG-EH | 15% | 130 | 10 | -0.34 | -6.34 | -0.22 | -4.22 |
| 60 | TEG-EH | 15% | 140 | 10 | -0.04 | -7.33 | -0.03 | -4.89 |

## Claims

1. A film comprising:

(a) a cellulose triacetate having an acetyl degree of substitution ($DS_{acetyl}$) of 2.8 to 2.95; and
(b) 5 to 15 weight percent, based on the total weight of the film, of a plasticizer selected from the group consisting of sorbitol hexapropionate, xylitol pentaacetate, xylitol pentapropionate, triacetin, polyester succinate, butylbenzenesulfonamide, camphor, 2,2,4-trimethyl-1,3-pentanediol diisobutyrate, polyester adipate, epoxidized octyl tallate, polyethylene glycol, tri(ethylene glycol) bis(2-ethyl hexanoate), and mixtures thereof;

wherein the film has been annealed at a temperature of 100 to 140°C for 1 minute to less than 60 minutes, and wherein the film has an optical retardation value in the thickness direction ($R_{th}$) of -15 to +15 nm when measured at a wavelength of 589 nm and normalized to a film thickness of 60 $\mu$m or less.

**2.** The film according to claim 1, which has an $R_{th}$ of -10 to +10.

**3.** The film according to claim 1, which has an $R_{th}$ of -5 to +5.

**4.** The film according to claim 1, wherein the plasticizer is xylitol pentaacetate, triacetin, butylbenzenesulfonamide, camphor, 2,2,4-trimethyl-1,3-pentanediol diisobutyrate, polyester adipate, epoxidized octyl tallate, polyethylene glycol, or tri(ethylene glycol) bis(2-ethyl hexanoate).

**5.** A polarizing plate which comprises the film according to claim 1.

**6.** A liquid crystal display which comprises the polarizing plate according to claim 5.

**7.** A polarizing plate which comprises the film according to claim 4.

**8.** A liquid crystal display which comprises the polarizing plate according to claim 7.

**9.** A process for making a film, comprising:

(a) forming a dope comprising:

(i) a cellulose triacetate having an acetyl degree of substitution ($DS_{acetyl}$) of 2.8 to 2.95;
(ii) a plasticizer selected from the group consisting of sorbitol hexapropionate, xylitol pentaacetate, xylitol pentapropionate, triacetin, polyester succinate, butylbenzenesulfonamide, camphor, 2,2,4-trimethyl-1,3-pentanediol diisobutyrate, polyester adipate, epoxidized octyl tallate, polyethylene glycol, tri(ethylene glycol) bis(2-ethyl hexanoate), and mixtures thereof; and
(iii) a solvent;

(b) casting the dope onto a surface to form a wet film;
(c) evaporating at least a portion of the solvent from the wet film to form a dry film; and
(d) annealing the dry film at a temperature of 100 to 140°C for 1 minute to less than 60 minutes to form a final film,

wherein the final film comprises 5 to 15 weight percent of the plasticizer, based on the total weight of the film, and wherein the final film has an optical retardation value in the thickness direction ($R_{th}$) of -15 to +15 nm when measured at a wavelength of 589 nm and normalized to a film thickness of 60 $\mu$m or less.

**10.** The process according to claim 9, wherein the final film has an Rth of -10 to +10.

**11.** The process according to claim 9, wherein the final film has an Rth of -5 to +5.

**12.** The process according to claim 9, wherein the plasticizer is xylitol pentaacetate, triacetin, butylbenzenesulfonamide, camphor, 2,2,4-trimethyl-1,3-pentanediol diisobutyrate, polyester adipate, epoxidized octyl tallate, polyethylene glycol, or tri(ethylene glycol) bis(2-ethyl hexanoate).


**Patentansprüche**

**1.** Film, umfassend:

(a) ein Cellulosetriacetat mit einem Acetylsubstitutionsgrad ($DS_{acetyl}$) von 2,8 bis 2,95; und
(b) 5 bis 15 Gewichts-%, bezogen auf das Gesamtgewicht des Films, eines Weichmachers ausgewählt aus der Gruppe bestehend aus Sorbithexapropionat, Xylitpentaacetat, Xylitpentapropionat, Triacetin, Polyestersuccinat, Butylbenzolsulfonamid, Campher, 2,2,4-Trimethyl-1,3-pentandioldiisobutyrat, Polyesteradipat, epoxidiertes Octyltallat, Polyethylenglykol, Triethylenglykolbis(2-ethylhexanoat), und Gemische davon;

wobei der Film bei einer Temperatur von 100 bis 140 °C für eine Zeitspanne von einer Minute oder weniger als 60 Minuten getempert worden ist, und wobei der Film einen optischen Retardationswert in Richtung der Dicke ($R_{th}$) von -15 bis +15 nm aufweist, wenn dieser bei einer Wellenlänge von 589 nm und einer normalisierten Filmdicke von 60 $\mu$m oder weniger gemessen wird.

**2.** Film nach Anspruch 1, der einen $R_{th}$-Wert von -10 bis +10 aufweist.

**3.** Film nach Anspruch 1, der einen $R_{th}$-Wert von -5 bis +5 aufweist.

**4.** Film nach Anspruch 1, wobei der Weichmacher Xylitpentaacetat, Triacetin, Butylbenzolsulfonamid, Campher, 2,2,4-Trimethyl-1,3-pentandioldiisobutyrat, Polyesteradipat, epoxidiertes Octyltallat, Polyethylenglykol oder Triethylenglykolbis(2-ethylhexanoat) ist.

**5.** Polarisationsplatte, welche den Film nach Anspruch 1 umfasst.

**6.** Flüssigkristalldisplay, welches die Polarisationsplatte nach Anspruch 5 umfasst.

**7.** Polarisationsplatte, welche den Film nach Anspruch 4 umfasst.

**8.** Flüssigkristalldisplay, welches die Polarisationsplatte nach Anspruch 7 umfasst.

**9.** Verfahren zum Herstellen eines Films, umfassend:

(a) Bilden eines Additivs, umfassend:

(i) ein Cellulosetriacetat mit einem Acetylsubstitutionsgrad ($DS_{acetyl}$) von 2,8 bis 2,95;
(ii) einen Weichmacher ausgewählt aus der Gruppe bestehend aus Sorbithexapropionat, Xylitpentaacetat, Xylitpentapropionat, Triacetin, Polyestersuccinat, Butylbenzolsulfonamid, Campher, 2,2,4-Trimethyl-1,3-pentandioldiisobutyrat, Polyesteradipat, epoxidiertes Octyltallat, Polyethylenglykol, Triethylenglykolbis(2-ethylhexanoat) und Gemische davon; und
(iii) ein Lösungsmittel;

(b) Gießen des Additivs auf eine Oberfläche, um einen feuchten Film zu bilden;
(c) Verdampfen mindestens eines Teils des Lösungsmittels aus dem feuchten Film, um einen trockenen Film zu bilden; und
(d) Tempern des trockenen Films bei einer Temperatur von 100 bis 140 °C für eine Zeitdauer von 1 Minute bis weniger als 60 Minuten, um einen finalen Film zu bilden,

wobei der finale Film 5 bis 15 Gewichts-% des Weichmachers umfasst, bezogen auf das Gesamtgewicht des Films, und
wobei der finale Film einen optischen Retardationswert in Richtung der Dicke ($R_{th}$) von -15 bis +15 nm aufweist, wenn dieser bei einer Wellenlänge von 589 nm und einer normalisierten Filmdicke von 60 $\mu$m oder weniger gemessen wird.

**10.** Verfahren nach Anspruch 9, wobei der finale Film einen $R_{th}$-Wert von -10 bis +10 aufweist.

**11.** Verfahren nach Anspruch 9, wobei der finale Film einen $R_{th}$-Wert von -5 bis +5 aufweist.

**12.** Verfahren nach Anspruch 9, wobei der Weichmacher Xylitpentaacetat, Triacetin, Butylbenzolsulfonamid, Campher, 2,2,4-Trimethyl-1,3-pentandioldiisobutyrat, Polyesteradipat, epoxidiertes Octyltallat, Polyethylenglykol oder Triethylenglykolbis(2-ethylhexanoat) ist.

**Revendications**

**1.** Film comprenant :

(a) un triacétate de cellulose ayant un degré de substitution acétyle ($DS_{acétyle}$) de 2,8 à 2,95 ; et
(b) 5 à 15 % en poids, par rapport au poids total du film, d'un plastifiant choisi dans le groupe constitué par l'hexapropionate de sorbitol, le pentaacétate de xylitol, le pentapropionate de xylitol, la triacétine, un polyester-succinate, le butylbenzènesulfonamide, le camphre, le diisobutyrate de 2,2,4-triméthyl-1,3-pentanediol, un polyester-adipate, le tallate d'octyle époxydé, le polyéthylèneglycol, le bis(2-éthylhexanoate) de triéthylèneglycol, et leurs mélanges ;

lequel film a été recuit à une température de 100 à 140°C pendant 1 minute à moins de 60 minutes, et
lequel film a une valeur de retard optique dans le sens de l'épaisseur ($R_{th}$) de -15 à +15 nm quand elle est mesurée à une longueur d'onde de 589 nm et normalisée à une épaisseur de film de 60 $\mu$m ou moins.

2. Film selon la revendication 1, qui a une valeur $R_{th}$ de -10 à +10.

3. Film selon la revendication 1, qui a une valeur $R_{th}$ de -5 à +5.

4. Film selon la revendication 1, dans lequel le plastifiant est le pentaacétate de xylitol, la triacétine, le butylbenzènesulfonamide, le camphre, le diisobutyrate de 2,2,4-triméthyl-1,3-pentanediol, un polyester-adipate, le tallate d'octyle époxydé, le polyéthylèneglycol, ou le bis(2-éthylhexanoate) de triéthylèneglycol.

5. Plaque polarisante qui comprend le film selon la revendication 1.

6. Affichage à cristaux liquides qui comprend la plaque polarisante selon la revendication 5.

7. Plaque polarisante qui comprend le film selon la revendication 4.

8. Affichage à cristaux liquides qui comprend la plaque polarisante selon la revendication 7.

9. Procédé pour produire un film, comprenant :

   (a) la formation d'un dope comprenant :

   (i) un triacétate de cellulose ayant un degré de substitution acétyle ($DS_{acétyle}$) de 2,8 à 2,95 ;
   (ii) un plastifiant choisi dans le groupe constitué par l'hexapropionate de sorbitol, le pentaacétate de xylitol, le pentapropionate de xylitol, la triacétine, un polyester-succinate, le butylbenzènesulfonamide, le camphre, le diisobutyrate de 2,2,4-triméthyl-1,3-pentanediol, un polyester-adipate, le tallate d'octyle époxydé, le polyéthylèneglycol, le bis(2-éthylhexanoate) de triéthylèneglycol, et leurs mélanges ; et
   (iii) un solvant ;

   (b) la coulée du dope sur une surface pour former un film humide ;
   (c) l'évaporation d'au moins une partie du solvant dans le film humide pour former un film sec ; et
   (d) le recuit du film sec à une température de 100 à 140°C pendant 1 minute à moins de 60 minutes pour former un film final,

   dans lequel le film final comprend 5 à 15 % en poids du plastifiant, par rapport au poids total du film, et
   dans lequel le film final a une valeur de retard optique dans le sens de l'épaisseur ($R_{th}$) de -15 à +15 nm quand elle est mesurée à une longueur d'onde de 589 nm et normalisée à une épaisseur de film de 60 $\mu$m ou moins.

10. Procédé selon la revendication 9, dans lequel le film final a une valeur $R_{th}$ de -10 à +10.

11. Procédé selon la revendication 9, dans lequel le film final a une valeur $R_{th}$ de -5 à +5.

12. Procédé selon la revendication 9, dans lequel le plastifiant est le pentaacétate de xylitol, la triacétine, le butylbenzènesulfonamide, le camphre, le diisobutyrate de 2,2,4-triméthyl-1,3-pentanediol, un polyester-adipate, le tallate d'octyle époxydé, le polyéthylèneglycol, ou le bis(2-éthylhexanoate) de triéthylèneglycol.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090068381 A1

**Non-patent literature cited in the description**

- **D.K. YANG ; S.T. WU.** Fundamentals of Liquid Crystal Displays. Wiley, 2006, 208-237